# EUROPEAN PATENT APPLICATION

(11) **EP 4 818 982 A2**
(43) Date of publication of application: **07.10.2026**
(21) Application number: 26185466.5
(22) Date of filing: 15.12.2022
(51) Int. Cl.: G06N 3/096

(54) **PROCESSING IMAGE DATA**

(30) Priority: 26.08.2022 GR 20220100710
(62) Document number(s) of the earlier application(s) in accordance with Art. 76 EPC: 22213954.5 / 4 328 849
(71) Applicant: Sony Interactive Entertainment Europe Limited, London W1F 7LP (GB)
(72) Inventor: BHUNIA, Ayan, London (GB); KHAN, Muhammad Umar Karim, London (GB); CHADHA, Aaron, London (GB); ANDREOPOULOS, Ioannis, London (GB)
(74) Representative: Gill Jennings & Every LLP

(57) **Abstract**

Image data of a first image in a sequence of images is processed using an artificial neural network (ANN) to generate output image data indicative of an alignment of the first image with a second image in the sequence. The ANN is trained using outputs of an alignment pipeline configured to perform alignment of images. The alignment pipeline is configured to determine flow vectors representing optical flow between images, and perform an image transformation using the flow vectors to align the images. The ANN is trained to emulate a result derivable using the alignment pipeline.

## Description

### Technical Field

The present disclosure concerns computer-implemented methods of processing image data. The disclosure is particularly, but not exclusively, applicable where the image data is video data.

### Background

In many applications, it is desirable to enhance the quality of images or videos, particularly where such images or videos have been compressed. For example, image enhancement may be used for restoration, super-resolution, denoising, patch completion, etc. Image quality enhancement can be broadly classified into single frame approaches on one hand, and multi-frame approaches on the other hand.

Single frame approaches attempt to improve the quality of a given image (e.g. a video frame) using only the given image and no additional frames. For example, some known methods use a shape-adaptive discrete cosine transform (DCT) to attempt to remove blocking and ringing artefacts due to JPEG compression. Convolutional neural networks (CNNs) have also been used for image restoration, e.g. to reduce JPEG artefacts. Variable-filter-size residue learning has also been proposed to replace the in-loop filter of HEVC intra-coding, and deep CNN-based auto decoder (DCAD) methods, which use 10 CNN layers, have been proposed to reduce the distortion of compressed video. Single frame approaches have inherent limitations, however. In particular, information in a given image may be irrecoverably lost due to compression or noise. For example, shape or texture details in an image may be underrepresented or washed-out in some cases, and may not be recoverable.

Multi-frame approaches use additional images (e.g. images that are adjacent to the given image in a temporal sequence) to try to enhance the quality of the given image. In particular, information from the additional images may be leveraged to improve the quality of the given image. For example, video frames which are adjacent to each another in time may exhibit strong correlation, and such correlated information may be used to enhance the video frames. That is, the adjacent frames can reinforce one another due to their temporal correlation, whereby, for example, information which may be missing in a first frame due to compression or noise is present in a second frame, or vice-versa. Therefore, such multi-frame approaches may be more successful in terms of image enhancement than single frame approaches, because information which may have been lost in a single image may still be recovered using the additional image.

In order to enhance a given image by leveraging information from an adjacent image, the two images may first need to be aligned. That is, although the two frames may be highly correlated, they are unlikely to be in precise alignment, e.g. because of apparent movement, or "flow", between the frames. For example, image features, objects, etc., may appear in different spatial positions in different frames, since the frames may correspond to different times and the features/objects may move over time. An alignment process may involve determining flow vectors (or "motion vectors") representing the flow (or movement) between the images, and then warping one or more of the images using the determined flow vectors, in order to align the images. Once aligned, the images can be used to reinforce one another (e.g. by leveraging temporal correlation) in order to improve the quality of the images. However, such an alignment process is complex and computationally expensive, e.g. in terms of processing resources, storage requirements, etc. Therefore, such processes may be difficult to perform in some hardware environments, e.g. those involving GPUs or custom hardware.

The present disclosure seeks to solve or mitigate some or all of these above-mentioned problems. Alternatively and/or additionally, aspects of the present disclosure seek to provide improved methods of processing image data.

### Summary

In accordance with a first aspect of the present disclosure there is provided a computer-implemented method of processing image data, the method comprising:
receiving image data of a first image in a sequence of images;
processing the received image data using an artificial neural network to generate output image data of the first image, the output image data being indicative of an alignment of the first image with a second image in the sequence of images; and
using the output image data for image processing,
wherein the artificial neural network is trained using outputs of an alignment pipeline configured to perform alignment of images input to the alignment pipeline,
wherein the alignment pipeline is configured to:
   determine flow vectors representing optical flow between the images input to the alignment pipeline; and
   perform an image transformation using the determined flow vectors to align the images input to the alignment pipeline,
wherein the artificial neural network is trained to emulate a result derivable using the alignment pipeline.

By training the artificial neural network (ANN) using outputs of the alignment pipeline to emulate a result derivable using the alignment pipeline, the alignment pipeline itself is not required to be used to process the received image data. In other words, the ANN is used in place of the alignment pipeline to process the received image data of the first image. This reduces computational complexity, and the amount of computing resources required, compared to a case in which the alignment pipeline itself is used to process the received image data (e.g. to align the first image with the second image). As such, the efficiency of image processing is improved, and latency associated with such processing is reduced. This allows the first image and/or the second image to be enhanced (since information from each of the images may be used to reinforce one another, based on the output image data indicative of an alignment of the images) in a more efficient manner, compared to known methods. Further, the hardware requirements for performing such processing are reduced compared to a case in which the alignment pipeline itself is used, which allows the image processing to be more easily deployed.

In embodiments, the first image and the second image are successive images in a temporal sequence of images. For example, the first image and the second image may comprise successive frames in a video. In embodiments, the output image data of the first image is used to aggregate temporal information of the first image and/or the second image. Aggregating temporal information of the first and/or second images enables temporal correlation between the first image and the second image to be used to enhance the first image and/or the second image. As such, processing the image data of the first image to approximate the result of an alignment of the first image with the second image enables temporal correlation between the first and second images to be exploited, e.g. to enhance the quality of the first image and/or the second image. Temporal information aggregation from adjacent frames is therefore achieved, using the ANN, but without the computational complexity associated with determining flow vectors and performing warping operations. Using temporal information aggregation to enhance images (e.g. for video restoration or denoising) results in higher quality output images compared to single-frame approaches.

In alternative embodiments, the first image and the second image are not successive (or adjacent) images in a temporal sequence of images. For example, the first and second images may be images in a temporal sequence of images, but not adjacent to one another in the temporal sequence. In further alternative embodiments, the first and second images are not images in a temporal sequence of images, but are instead images in a spatial sequence of images. For example, the first and second images may be adjacent in space, rather than adjacent in time. In such embodiments, spatial correlation instead of temporal correlation between the images may be leveraged to enhance one or more both of the images. In some examples, the first and second images are not adjacent in space. In other examples, the first and second images are adjacent in both space and time.

Some known methods of aggregating information passing between different images do not employ an alignment pipeline that uses flow vectors and warping operations. For example, some methods aggregate information by simple concatenation of the images followed by hierarchical feature fusion using a neural network (e.g. FastDVDNet). However, this type of approach requires multiple stages of the network for final inference. This is more complex, and less efficient, than the presently described method of using an ANN that is trained to emulate an alignment pipeline. The presently described methods require fewer computational operations than such known methods.

The image data of the first image that is received and processed at the ANN is different from the images that are input to the alignment pipeline. The images that are input to the alignment pipeline may be used to train the ANN and/or the alignment pipeline, according to embodiments. However, it will be understood that the alignment pipeline itself is not required to be used to process the image data of the first image. The image data of the first image is processed by the ANN, in place of the alignment pipeline. As such, it is only the trained ANN, and not the alignment pipeline, which is used for deployment (or inference).

As discussed above, the ANN is trained to emulate a result derivable using the alignment pipeline. For example, the ANN may be trained to emulate (or mimic) an output of the alignment pipeline. Such an output could comprise a warped image or a warped feature map of an image, for example, where the image or feature map has been warped so as to achieve alignment with another image or feature map. In embodiments, the result that the ANN is trained to emulate is a result of processing the image data of the first image using the alignment pipeline. However, it will be understood that the alignment pipeline itself is not used to process the image data of the first image. The ANN is nevertheless trained to approximate a result which could be obtained if the alignment pipeline were to be used to process the image data of the first image, e.g. to align the first and second images. The ANN is able to emulate such a result because the ANN has been trained using outputs of the alignment pipeline. The ANN is thus configured to approximate the alignment of images (or of features of images), by emulating the operations and/or outputs of the alignment pipeline.

In embodiments, the output image data of the first image comprises an approximation of a result of performing the image transformation on the image data of the first image using flow vectors representing optical flow between the first image and the second image. In other words, the output image data generated by the ANN approximates (or emulates) what the output of the alignment pipeline would be, were the alignment pipeline to be used to process the image data of the first image. As such, while the alignment pipeline itself is not used to process the image data of the first image, the ANN generates data which emulates an expected result of such an operation.

As mentioned above, the alignment pipeline is configured to determine flow vectors representing optical flow between images. Optical flow is a pattern of apparent movement of objects, features, blocks, individual pixels, etc., between images. For example, a given image feature that is at position x, y in a first image may appear to have "moved" to position x+dx, y+dy in a second image. A flow vector (which may also be referred to as a "motion vector") is a measure of the apparent movement of image features between images, e.g. dx, dy. Such motion vectors therefore represent movement, or flow, between images.

In embodiments, the image transformation comprises a warping operation for warping at least one of the images input to the alignment pipeline based on the determined flow vectors. For example, each of a set of image features may be at a respective position x, y in a given image. A corresponding set of flow vectors dx, dy may be determined, representing movement of the features between the given image and a further image. The warping operation adjusts the positions of the features in the given image (and/or in the further image) based on the flow vectors, e.g. x+dx, y+dy. The warping operation may be performed on images themselves, or on feature maps representing the images. Other types of image transformation may be used in alternative embodiments (e.g. rotations, translations, dilations, etc.).

In embodiments, the ANN comprises a series of convolutional filters, and processing the received image data using the ANN comprises applying the convolutional filters to the received image data. Such convolutional filters do not require warping operations or the application of flow vectors, and are thus computationally simpler (and thereby more efficient) to use in processing the received image data compared to the alignment pipeline. Further, such convolutional neural network operations can achieve optimal performance in GPUs or custom hardware, which is in contrast with the alignment pipeline which, due to its computational complexity, may be difficult to implement on such hardware. The ANN is thus more easily deployable on hardware or GPUs compared to known methods. In other words, temporal information aggregation can be achieved based on simplified convolutional neural network operations without the need for warping operations that are used with flow networks. In embodiments, the convolutional filters use ReLU non-linearities.

In embodiments, the image transformation (e.g. the warping operation) is dependent on content of the images input to the alignment pipeline. This is because, for example, the warping operation is dependent on flow vectors which are specific to a given pair of images. Different images result in different flow vectors, and consequently a different warping operation. In contrast, the convolutional filters of the ANN may be independent of content of the first image. That is, the same convolutional filters may be applied to the image data of the first image, regardless of the content of the first image. The convolutional filters may be fixed, in other words. As such, the ANN is not required to perform data-dependent operations, unlike the alignment pipeline, which is required to perform data-dependent operations. This reduces computational complexity compared to a case in which the alignment. pipeline is instead used to process the received image data.

In embodiments, the received image data of the first image comprises a map of image features derivable from the first image. As such, the term "image data" as used herein may refer to feature maps (or maps of features) of a given image. A feature map may indicate locations of image features in the image. A feature map may be a map in image space, or a different (e.g. latent) space. In embodiments, the output image data comprises an approximation of a result of aligning the map of image features derivable from the first image with a map of image features derivable from the second image. By aligning the first and second images in feature space, the dimensionality of the images may be reduced, thereby reducing computational complexity and increasing processing efficiency. In alternative embodiments, the received image data comprises pixel data, e.g. one or more values per pixel, of an image. Accordingly, image alignment may be performed in feature space (where corresponding image features are aligned across images) or in pixel space.

In embodiments, the ANN is trained using a loss function configured to determine a difference between an output of the ANN and the output of the alignment pipeline. Training the ANN may comprise adjusting the weights of the ANN to try to minimise the loss function, such that the output of the ANN is similar to the output of the alignment pipeline. The ANN may be trained using back-propagation of errors and stochastic gradient descent, for example, where the errors are generated using the loss function (and consequently the alignment pipeline).

In embodiments, the alignment pipeline comprises a further ANN that is trained to determine the flow vectors. The further ANN, which may be referred to as a "flow network", is trained to aggregate temporal information from images that are adjacent in time and/or space. Using a trained ANN to determine the flow vectors improves the accuracy of the flow vectors, and therefore of the alignment that is obtainable using the alignment pipeline, compared to a case in which a trained ANN is not used to determine the flow vectors. By improving the performance of the alignment pipeline, the performance of the ANN is also improved, since the ANN is trained to emulate the alignment pipeline. In embodiments, the flow network is trained prior to training of the ANN. The weights and/or parameters of the flow network may then be fixed during training of the ANN. In alternative embodiments, the flow network and the ANN are trained simultaneously.

In embodiments, the ANN comprises a student artificial neural network, and the alignment pipeline comprises a teacher artificial neural network. The principles and/or methods of knowledge distillation (KD) may be employed to distil knowledge from the teacher ANN to the student ANN. While KD mechanisms have previously been employed in the context of reducing the size of a model (i.e. training a smaller network to emulate the outputs of a larger network), the presently-described methods instead use the principle of KD to approximate the operations of a flow network and warping operations, to train a convolutional filter-based neural network which does not use warping operations or determine flow vectors. As such, KD is not merely used herein for model compression, but rather to train a neural network that uses a first type of operation (e.g. applying convolutional filters) to emulate a pipeline that uses a second, different type of operation (e.g. determining flow vectors and performing a warping operation). The first type of operation is less computationally complex and/or expensive than the second type of operation.

In embodiments, the ANN is trained using an affinity distillation loss function configured to determine a difference (or multiple differences) between a teacher affinity matrix and a student affinity matrix. The teacher affinity matrix is indicative of dependencies between image features in a map of image features generated by the alignment pipeline. The student affinity matrix is indicative of dependencies between image features in a map of image features generated by the ANN. During training, the ANN may be adjusted so as to minimise differences between the teacher affinity matrix and the student affinity matrix. As such, knowledge distillation may be based on a model of the long-range dependencies between image features. Such long-range dependencies are distilled from the more sophisticated flow network-based feature alignment pipeline to the more simplified student network, namely the ANN. This improves the accuracy of the ANN in emulating the operations of the alignment pipeline (and mimicking the outputs of the alignment pipeline), and consequently improves the performance of the ANN in aggregating information passing between the first and second images. In embodiments, the affinity distillation loss function is operable to align the student affinity matrix with the teacher affinity matrix. The affinity loss function is based on relationships between features, rather than merely the features themselves. This provides an additional layer of information for knowledge distillation, compared to a case in which the image features generated by the ANN and the alignment pipeline are compared but without considering feature inter-dependencies.

In embodiments, the output image data of the first image generated using the ANN is used to concatenate the first image with the second image. Since the output image data of the first image is indicative of (e.g. approximates) a result of aligning the first image with the second image, using the output image data of the first image to concatenate the first and second images improves the utility of the concatenated pair of images, compared to a case in which the images are not aligned. The concatenated pair of images may be used in denoising, upscaling, and/or other forms of image enhancement. In particular, the concatenated pair of images may be used to enhance one or both of the first image and second image. Information in the first image can be used to reinforce the second image (e.g. providing details that may be missing or altered in the second image) and vice-versa. This improves the quality of the subsequently enhanced image(s).

In embodiments, the output image data of the first image is used to upscale the first image and/or the second image. Upscaling an image (also referred to as "super-resolution") involves increasing the resolution of the image (i.e. the number of pixels used to represent the image). This in turn increases the amount of information/detail in the image. Upscaling may be performed using a neural network, in some examples. Since the output image data of the first image approximates a result of aligning the first image with the second image, correlation between the two images can be utilized (e.g. using the information in one image to reinforce the other image, and vice-versa), thereby improving the quality of the upscaled output.

In embodiments, the output image data of the first image is used to denoise the first image and/or the second image. Denoising may be performed by feeding the output image data of the first image, along with image data of the second image, into a series of ResBlocks. Other methods of denoising may be used in alternative embodiments. Since the output image data of the first image approximates a result of aligning the first image with the second image, correlation between the two images can be leveraged (e.g. using the information in each image to reinforce the other), thereby improving the quality of the denoised output. Other types of image enhancement using the output image data of the first image may be performed in other embodiments.

In embodiments, the outputs of the alignment pipeline comprise final outputs of the alignment pipeline. That is, the final outputs of the alignment pipeline may be used to train the ANN. The ANN may thus be trained to emulate, or mimic, the final outputs of the alignment pipeline. The final outputs may comprise outputs of (i.e. results of) a warping operation. For example, the final outputs may comprise one or more warped images and/or warped feature maps of images. The ANN can thus be trained to generate outputs which approximate (or resemble) the final outputs of the alignment pipeline. In alternative embodiments, the outputs of the alignment pipeline used to train the ANN comprise intermediate outputs of the alignment pipeline. Such intermediate outputs may comprise sets of flow vectors, transformed feature maps of images, etc.

The output image data of the first image may be used for other forms of image processing in alternative embodiments. For example, the output image data of the first image may be outputted for storage and/or transmission, encoded and/or compressed, etc.

In embodiments, image data of the second image is received. The image data of the second image is processed using the ANN to generate output image data of the second image. The output image data of the second image is indicative of alignment of the second image with the first image. The output image data of the second image is used for image processing. As such, the ANN may process both the image data of the first image and the image data of the second image. In alternative embodiment, the ANN processes only the image data of the first image.

In embodiments, the ANN comprises a convolutional neural network (CNN). Advantageously, such a neural network comprises multiple layers having a convolutional architecture, with each layer being configured to receive the output of one or more previous layers. Such an artificial neural network may comprise a set of interconnected adjustable weights and activation functions. In embodiments, the outputs of each layer of the neural network are passed through a non-linear parametric linear rectifier function, pReLU. Other non-linear functions may be used in other embodiments.

In embodiments, image data of a given image comprises pixel values of the image. In alternative embodiments, image data of a given image comprises a map of features of the image, the map of features being derivable from the pixel data, e.g. in a latent space. Such features may be extracted from the image using an artificial neural network, according to embodiments.

The methods of processing image data described herein may be performed on a batch of video data, e.g. a complete video file for a movie or the like, or on a stream of video data. In embodiments, the received image data represents a portion of an image or video frame, e.g. a block or sub-region of an image.

In accordance with another aspect of the present disclosure, there is provided a computer-implemented method of configuring an ANN, the method comprising:
receiving image data of a first image in a sequence of images;
processing the received image data using an artificial neural network to generate output image data of the first image, the output image data indicative of an alignment of the first image with a second image in the sequence of images;
receiving an output of an alignment pipeline configured to perform alignment of images input to the alignment pipeline,
wherein the alignment pipeline is configured to:
   determine flow vectors representing optical flow between the images input to the alignment pipeline; and
   perform an image transformation using the determined flow vectors to align the images input to the alignment pipeline, and
training the artificial neural network using the output of the alignment pipeline and the output image data of the first image,
wherein the artificial neural network is trained to emulate a result derivable using the alignment pipeline.

In accordance with another aspect of the disclosure there is provided a computing device comprising:
a processor; and
memory;
wherein the computing device is arranged to perform using the processor any of the methods described above.

In accordance with another aspect of the disclosure there is provided a computer program product arranged, when executed on a computing device comprising a processor or memory, to perform any of the methods described above.

It will of course be appreciated that features described in relation to one aspect of the present disclosure described above may be incorporated into other aspects of the present disclosure.

### Description of the Drawings

Embodiments of the present disclosure will now be described by way of example only with reference to the accompanying schematic drawings of which:
- Figure 1: is a schematic workflow diagram showing an example of image processing;
- Figure 2: is a schematic workflow diagram showing an example training process in accordance with embodiments;
- Figure 3: is a schematic workflow diagram showing an example of image processing in accordance with embodiments;
- Figures 4(a) to 4(d): are schematic diagrams showing examples of neural networks in accordance with embodiments;
- Figures 5(a) to 5(c): are schematic diagrams showing examples of neural networks in accordance with embodiments;
- Figure 6: is a flowchart showing the steps of a method of processing image data in accordance with embodiments;
- Figure 7: is a flowchart showing the steps of a method of configuring an artificial neural network in accordance with embodiments; and
- Figure 8: is a schematic diagram of a computing device in accordance with embodiments.

### Detailed Description

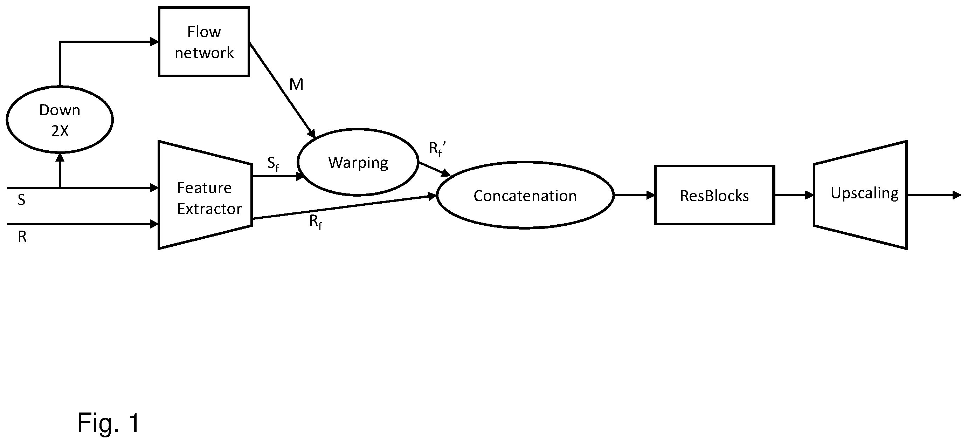

Figure 1 is a schematic diagram showing an example of image processing. The example framework shown in Figure 1 is operable to simultaneously denoise and upscale content (e.g. images and/or videos). A pair of input frames is aligned and concatenated, prior to a denoising backbone network of 10 ResBlocks, as well as an upscaling operation that produces the two output (denoised and upscaled) frames. Each ResBlock has an output of 32 channels in this example.

More than two input frames may be processed at a time in other examples. However, processing pairs of input frames may be optimal in terms of a trade-off between additional quality gain on the one hand (from considering additional images) and the computational cost associated with processing additional images.

Alignment of the frames allows correlation between the frames to be used to improve the output quality of the denoised and upscaled frames, e.g. by leveraging information passing between the frames. That is, although two successive frames may be highly correlated, they are not necessarily aligned with each other. For example, an (x,y) pixel position in a t-th frame may correspond to a (x+dx, y+dy) pixel position in the (t+1)-th frame. Therefore, a naïve concatenation of the two frames (or feature maps of the two frames) without alignment would be sub-optimal. Alignment of the frames is thus achieved by using a flow network, configured to determine flow between the frames. In other words, the flow network predicts the (dx, dy) values at every position of the t-th frame. The flow network may comprise a light-weight spy-net architecture, although it will be understood that other architectures and/or functions may be used in other examples. The operation of the flow network is followed by a warping operation to warp one or both of the input frames using the (dx, dy) values determined by the flow network. This allows the (t+1)-th frame to be aligned "on top of" the t-th frame, and vice-versa.

In the example shown in Figure 1, alignment is performed at the feature level, e.g. by determining the flow, between images, of each feature of a set of image features. In other examples, alignment is performed at the pixel level, e.g. by determining flow vectors for each pixel. Features are extracted using a feature extractor function, which may comprise an artificial neural network, e.g. a convolutional neural network. For example, the feature extractor function may comprise two strided-convolution layers to reduce the spatial dimensionality of the image, for reducing complexity.

In the example shown in Figure 1, the input frames are downscaled by a factor of 2 before feeding the frames through the flow network, in order to reduce the computational complexity. The two input frames may be referred to as "support" and "reference" frames. The support frame is warped on top of the reference frame based on the predicted flow vectors in the convolutional feature space determined by the flow network. Thereafter, the reference frame feature and warped support frame feature are concatenated across the channel dimension, and this is fed through a series of convolutional ResBlocks for denoising.

Each ResBlock of the framework shown in Figure 1 comprises two convolutional layers with a ReLu activation between the two convolutional layers, and a final skip connection. The upscaling layers may be implemented using Depth-to-Space or PixelShuffle operations, although it will be understood that other upscaling operations may be used in other examples.

The image processing framework shown in Figure 1 may comprise more, fewer or different components in other examples. For example, one or more of upscaling, feature extraction, downscaling, concatenating and denoising may be omitted.

The use of the flow network and warping operation (which together may form an "alignment pipeline") allows information from adjacent frames to be leveraged, in order to improve the quality of the enhanced frames compared to single-frame enhancement methods. However, as discussed above, implementing the flow network and warping operation during deployment is computationally expensive, and cumbersome from a hardware perspective. In particular, the flow between images and/or the warping operation are data-dependent, i.e. the operations are different for different input images. This makes the flow network and warping operation inefficient to run, requiring significant computational resources, and difficult to implement on hardware or GPU-based deployments.

Therefore, the presently-described methods bypass the complexity of the flow network and warping operation, while preserving the quality enrichment achieved by using information from adjacent frames. This is achieved by using a teacher-student training paradigm, whereby a pre-trained alignment pipeline (comprising a flow network and warping operation) such as that described with reference to Figure 1 is used to train an ANN such that the ANN emulates the output of the alignment pipeline. The adaptive feature alignment capability of the alignment pipeline is distilled into a simpler series of convolutional layers, as described in more detail below.

The embodiments described herein are applicable to batch processing, i.e. processing a group of images or video frames together without delay constraints (e.g. an entire video sequence), as well as to stream processing, i.e. processing only a limited subset of a stream of images or video frames, or even a select subset of a single image, e.g. due to delay or buffering constraints.

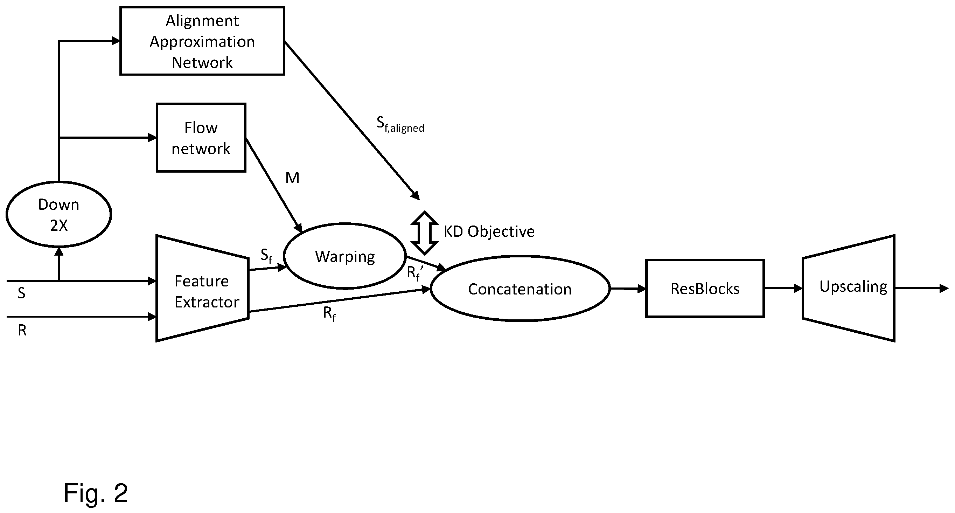

Figure 2 shows schematically a training process in accordance with embodiments. The training process enables an ANN (also referred to as an "alignment approximation network") to replace the flow network and warping operation of Figure 1, thereby reducing computational complexity and increasing efficiency of image processing.

Given two concatenated frames (support frame S and reference frame R) pass through the flow network F, the flow network predicts flow matrix M as M = Flow(concat[S,R]), where concat[] is a vector concatenation operation. M is a h*w*2 tensor with displacement vectors (dx, dy) at every position. As in Figure 1, a warping operation is used to align the features of the support frame, S_{f}, with the features of the reference frame, R_{f}, as: *R_{f}*' = Warp(S_{f},M), where R_{f} is the feature map of the reference frame and S_{f} is the feature map of the support frame. The whole set of operations involving the flow network and warping operation (corresponding to the overall alignment pipeline) may be denoted as: S_{f_aligned} = F(S,R;S_{f}), where an aligned feature map of the support frame, S_{f_aligned}, is the output.

To remove the flow network and warping operation, an alignment approximation network (AAN) is provided, which takes the channel-wise concatenated feature map of the support and reference frames as input and tries to mimic the aligned feature map of the support frame, S_{f_aligned}.

To train the alignment approximation network, a knowledge distillation loss function is used: Loss_{KD} = ||S_{f,aligned} - *AAN*(concat[S_{f}, R_{f}]||₂. As such, the alignment approximation network is trained based on determined differences between an output of the alignment approximation network and an output of the alignment pipeline. The alignment approximation network may be trained using back-propagation, as described in more detail below. Therefore, the output of the trained AAN emulates S_{f_aligned}.

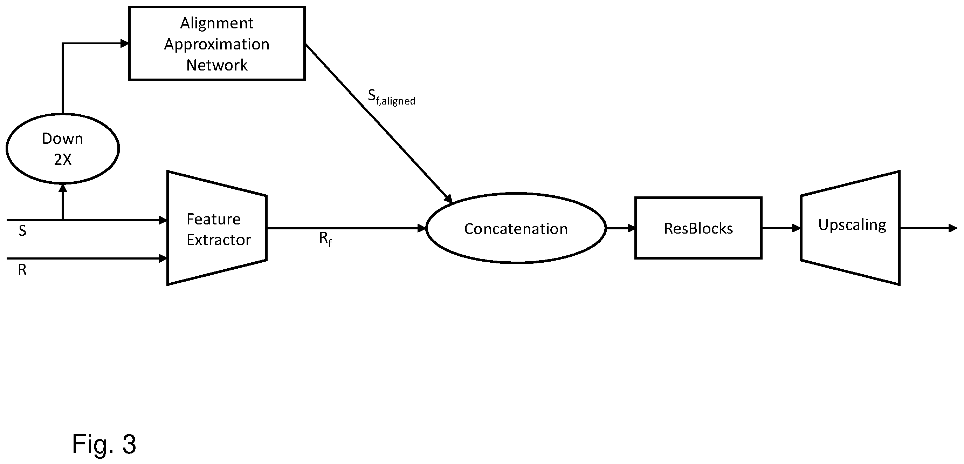

Figure 3 shows schematically image processing in accordance with embodiments. In Figure 3, the alignment approximation network has been trained, and the flow network and warping operation of Figures 1 and 2 can therefore be removed. The trained alignment approximation network is used for inference (i.e. processing of image data during deployment), in place of the flow network and warping operation, with the other parts of the image processing pipeline (e.g. the denoising ResBlocks, upscaling layers, etc.) intact.

In embodiments, the alignment approximation network is additionally trained using an affinity distillation loss function that is based on long range non-local dependencies between aligned image features. The motivation of the feature approximation module is to eliminate the necessity of the relatively complicated flow-network and warping operations. Instead of relying on the implicit receptive field of the convolutional network, a regularization constraint is additionally imposed that models the long range non-local dependency from sophisticated flow network-based alignment into the more simplified FAA module. In other words, this helps to model more contextual information in order to better distil the knowledge of the flow network into the FAA module.

Given S_{f_aligned} is of size h*w*d, with h, w and d representing height, width and feature dimension, a teacher affinity matrix A^{T} is calculated as follows: ${A}^{T} \left(i, j\right) = \frac{1}{h \times w} \frac{{γ}_{i}}{{\left‖{γ}_{i}\right‖}_{2}} ⋅ \frac{{γ}_{j}}{{\left‖{γ}_{j}\right‖}_{2}}$ where γᵢ is a d-dimensional feature at the i-th location of the feature map. The affinity matrix is of size m*m, where m = h*w. The teacher affinity matrix is calculated from the aligned feature map obtained using the flow network and warping operation. Similarly, a student affinity matrix A^{S} is calculated based on the output of the alignment approximation network, e.g. a modified feature map that approximates the aligned feature map. The student affinity matrix may be of the same spatial size as the teacher affinity matrix. The affinity distillation loss is therefore defined as: *Loss_{affinity_KD}* = ∥*A^{T}* - *A^{S}*∥₂, i.e. a difference measure between the teacher affinity matrix and the student affinity matrix.

The overall training objective for the alignment approximation network may thus be defined as *Loss_{Total}* = *Loss_{KD}* + *Loss_{affinity_KD}.* The weights of the alignment approximation network may be adjusted, e.g. using back-propagation and gradient descent, so as to minimise this overall loss function. In alternative embodiments, the affinity distillation loss function is not used, and the overall training objective is solely given by *Loss_{KD}*.

As with Figure 1, the image processing frameworks shown in Figures 2 and 3 may comprise more, fewer or different components in other embodiments. For example, one or more of upscaling, feature extraction, downscaling, concatenation and denoising may be omitted in alternative embodiments.

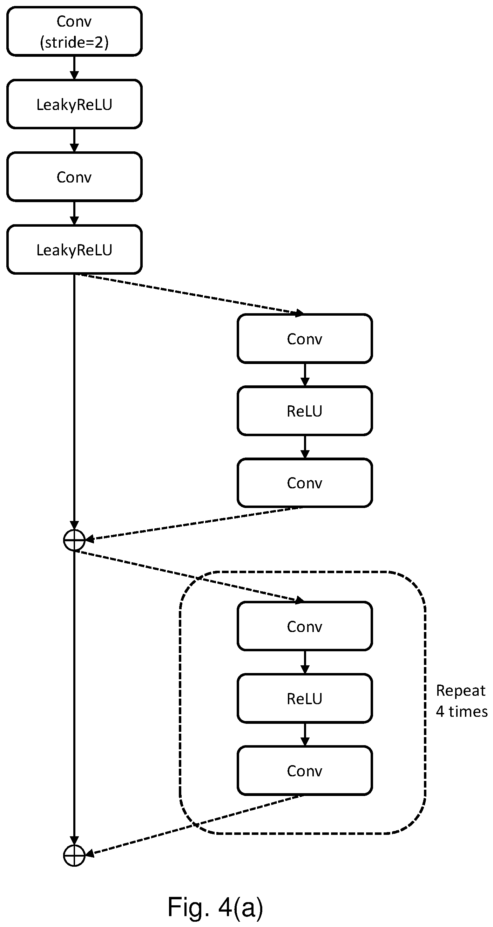

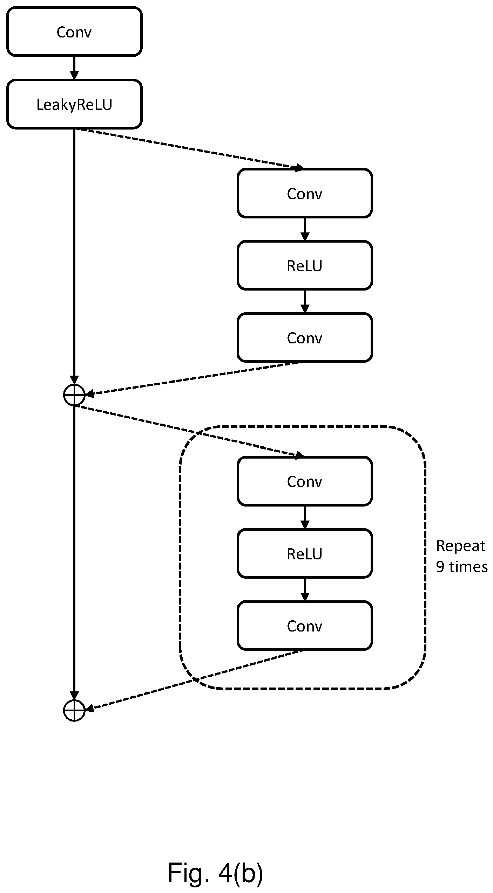

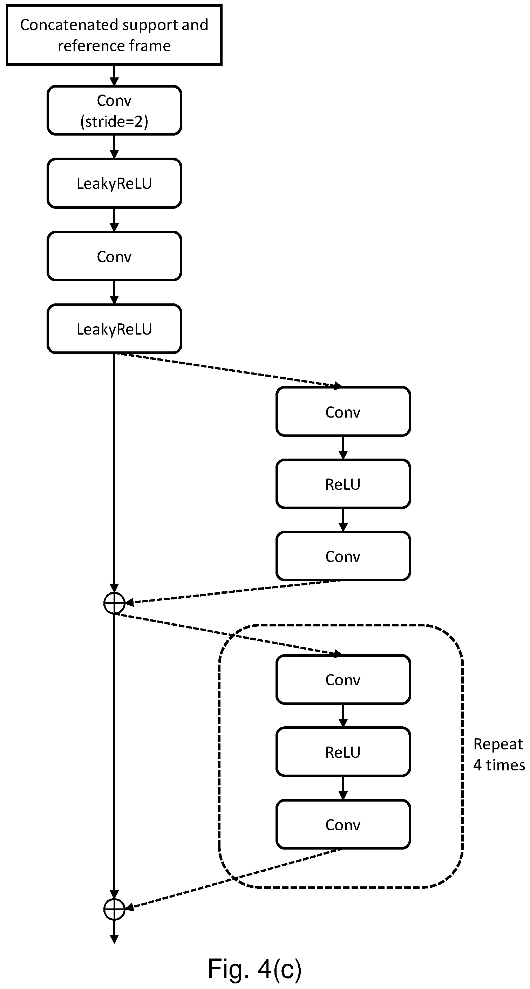

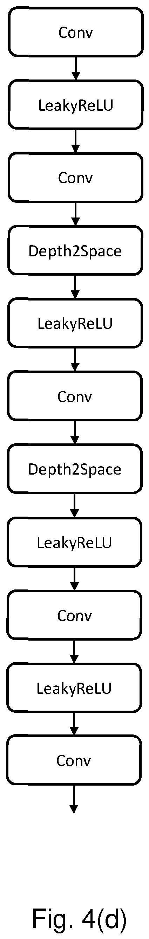

Figure 4 shows schematic examples of neural network architectures for various components shown in Figures 1 to 3. In particular, Figure 4(a) shows an example architecture for the feature extractor function, Figure 4(b) shows an example architecture for the ResBlocks for feature denoising, Figure 4(c) shows an example architecture for the alignment approximation network, and Figure 4(d) shows an example architecture for the upscaling function.

In each of Figures 4(a)-4(d), a cascade of convolutional and parametric ReLu (pReLu) layers map input pixel groups to transformed output pixel groups. All layers receive the representation from the previous layer as input. There is also an optional skip connection between some intermediate layers of Figures 4(a)-4(c), illustrated by horizontal arrows leading to summation points. Some layers may also have dilated convolutions or pooling components to increase or decrease resolution of the receptive field, respectively. Training of these layers is carried out via back-propagation and stochastic gradient descent.

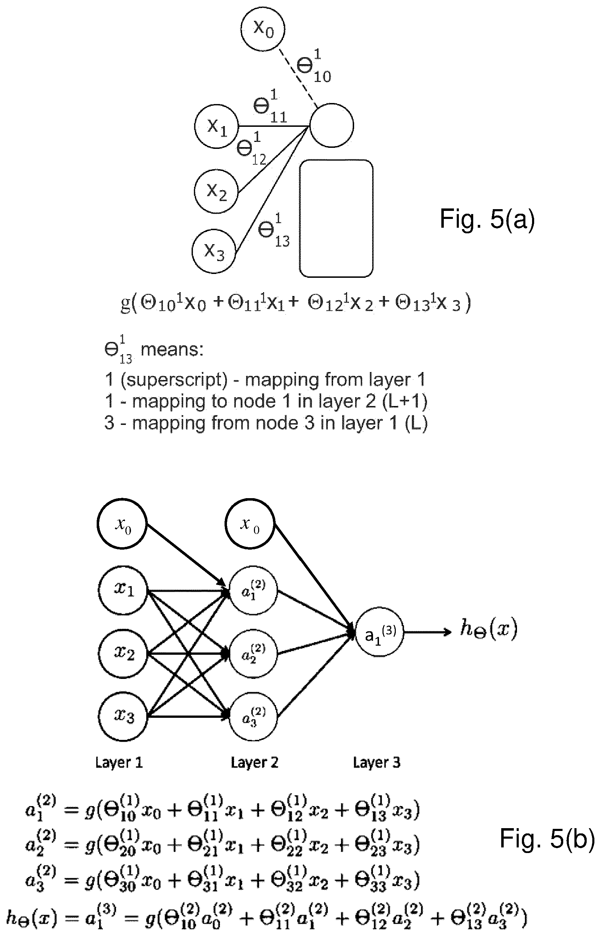

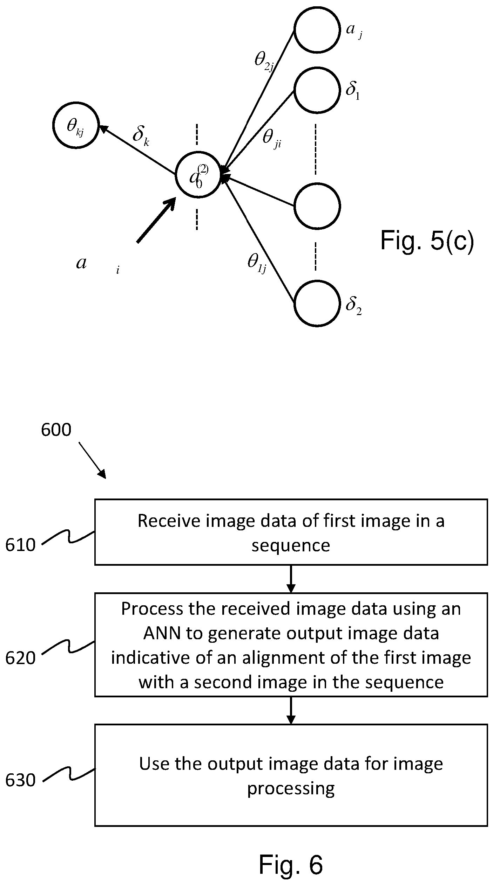

A neural network as described herein may comprise a network of interconnected learnable weights. In particular, a neural network, such as a convolutional neural network (CNN), can comprise any combination of weights connected in a network and having a non-linear function (akin to an activation function of an artificial neural network). An example of such connections and weights is shown in Figure 5(a). An example of the global connectivity between weights and inputs is shown in Figure 5(b). That is, Figure 5(a) shows a combination of inputs x₀, ..., x₃ with weight coefficients Θ and non-linear activation function g(), and Figure 5(b) is a schematic diagram showing layers of interconnected activations and weights, forming an artificial neural network. Such examples are trained with back-propagation of errors computed at the output layer, using gradient descent methods. This is shown in Figure 5(c), which depicts schematically the back-propagation of errors δ from coefficient *a₀⁽²⁾* of an intermediate layer to the previous intermediate layer using gradient descent.

The output of an ANN can be either a 2D image (or 3D video) or a 1D vector of features. In the latter case the last convolutional layer is vectorised either by reshaping to 1D or alternatively by using a global pooling approach (e.g. global average pooling or global max pooling). The dimensionality of the vector is the number of channels in the last convolutional layer. If the output is 1D, the vectorisation may be followed by one or more dense layers (as shown in Figure 5(b)). Similarly, the inputs to the ANN may be 2D images (or 3D video) or 1D vectors of features.

In embodiments, back-propagation learning uses learning rules that are deterministic or stochastic (e.g. done after averaging over batches of arbitrarily sampled inputs/outputs). Gradients can be computed on single inputs, on batches of inputs or on the whole training dataset, per training iteration. The learning parameters, such as the initial learning rate and learning rate decay, can be empirically tuned to optimize speed of training and performance. Batches of training data can be selected in a deterministic or random/pseudo-random manner.

For brevity, training and inference are described herein as two separate 'offline' and 'online' stages. However, it will be understood that training can also take place periodically or continuously during inference, e.g. based on new data, and the ANN can be adjusted and/or new versions produced, based on such periodic or continuous training.

Figure 6 shows a method 600 for processing image data. The method 600 may be performed by a computing device, according to embodiments. The method 600 may be performed at least in part by hardware and/or software. In embodiments, the method 600 is performed at least in part by an encoder apparatus. Such an encoder apparatus may be operable to send data to one or more decoders, e.g. via a wireless network, and/or to store data in a storage medium. In other embodiments, the method 600 is performed at least in part by a decoder apparatus. Such a decoder apparatus may be operable to receive data from one or more encoders and process the received data for display at a display device.

At item 610, image data of a first image in a sequence of images is received. The image data may be retrieved from storage (e.g. in a memory), or may be received from another entity (e.g. live camera feed, encoder apparatus, etc.). In embodiments, the image data comprises a feature map derived from the first map. Such a feature map may indicate image features and their locations in the first image.

At item 620, the received image data is processed using an ANN to generate output image data of the first image. The output image data is indicative of an alignment of the first image with a second image in the sequence of images. That is, the output image data is indicative of (or approximates) a result of an alignment of the first image with the second image. In embodiments, the output image data comprises a modified feature map of the first image. The modified feature map is indicative of (or approximates) a result of aligning the feature map of the first image with a feature map of the second image.

At item 630, the output image data is used for image processing. Such image processing may include, but is not limited to, concatenating, denoising, upscaling, encoding, transmitting, storing, and/or displaying image data.

The ANN is trained (e.g. has been trained) using outputs of an alignment pipeline. The alignment pipeline is configured to perform alignment of images input to the alignment pipeline. The alignment pipeline is configured to determine flow vectors representing optical flow between the images input to the alignment pipeline. The alignment pipeline is configured to perform an image transformation, such as a warping operation, using the determined flow vectors to align the images input to the alignment pipeline.

The ANN is trained (e.g. has been trained) to emulate a result derivable using the alignment pipeline. For example, the ANN may be trained to emulate a result that would be obtained using the alignment pipeline, if the alignment pipeline were to be used to process the image data of the first image. The ANN is used in place of the alignment pipeline to process the image data of the first image.

In embodiments, the image transformation comprises a warping operation for warping at least one of the image input to the alignment pipeline based on the determined flow vectors.

In embodiments, the first image and the second image are successive images in a temporal sequence of images.

In embodiments, the method 600 comprises using the output image data of the first image to aggregate temporal information of the first image and/or the second image, thereby to enable temporal correlation between the first image and the second image to be used to enhance the first image and/or the second image.

In embodiments, the output image data of the first image comprises an approximation of a result of performing the image transformation on the image data of the first image using flow vectors representing optical flow between the first image and the second image.

In embodiments, the ANN comprises a series of convolutional filters, and processing the received image data using the ANN comprises applying the convolutional filters to the received image data.

In embodiments, the image transformation (e.g. the warping operation) is dependent on content of the images input to the alignment pipeline, and the convolutional filters of the ANN are independent of content of the first image.

In embodiments, the received image data of the first image comprises a map of image features derivable from the first image. In some such embodiments, the output image data comprises an approximation of a result of aligning the map of image features derivable from the first image with a map of image features derivable from the second image.

In embodiments, the ANN is trained (e.g. has been trained) using a loss function configured to determine a difference between an output of the ANN and the output of the alignment pipeline.

In embodiments, the alignment pipeline comprises a further ANN trained to determine the flow vectors.

In embodiments, the ANN comprises a student ANN, and wherein the alignment pipeline comprises a teacher ANN.

In embodiments, the ANN is trained (e.g. has been trained) using an affinity distillation loss function configured to determine a difference between a teacher affinity matrix and a student affinity matrix. The teacher affinity matrix is indicative of dependencies between image features in a map of image features generated by the alignment pipeline. The student affinity matrix is indicative of dependencies between image features in a map of image features generated by the ANN.

In embodiments, the method 600 comprises receiving image data of the second image. The received image data of the second image is processed using the ANN to generate output image data of the second image, the output image data of the second image being indicative of alignment of the second image with the first image. The output image data of the second image is used for image processing.

In embodiments, the method 600 comprises concatenating the first image with the second image using the output image data of the first image generated using the ANN.

In embodiments, the method 600 comprises upscaling the first image and/or the second image using the output image data of the first image.

In embodiments, the method 600 comprises denoising the first image and/or the second image using the output image data of the first image.

In embodiments, the outputs of the alignment pipeline comprise final outputs of the alignment pipeline.

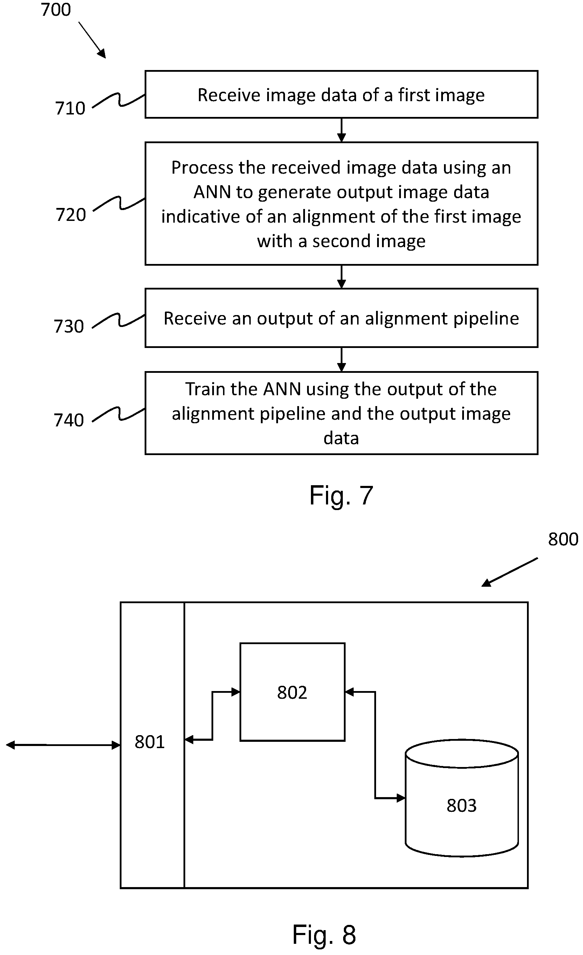

Figure 7 shows a method 700 of configuring an artificial neural network (ANN). The 700 1000 may be performed by a computing device, according to embodiments. The method 700 may be performed at least in part by hardware and/or software. In embodiments, the method 700 is performed at least in part by an encoder apparatus. Such an encoder apparatus may be operable to send data to one or more decoders, e.g. via a wireless network, and/or to store data in a storage medium. In other embodiments, the method 700 is performed at least in part by a decoder apparatus. Such a decoder apparatus may be operable to receive data from one or more encoders and process the received data for display at a display device.

At item 710, image data of a first image in a sequence of images is received.

At item 720, the received image data is processed using an ANN to generate output image data of the first image. The output image data is indicative of an alignment of the first image with a second image in the sequence of images. In other words, the output image data approximates a result of aligning the first image with the second image.

At item 730, an output of an alignment pipeline is received. The alignment pipeline is configured to perform alignment of images input to the alignment pipeline. The alignment pipeline is configured to determine flow vectors representing optical flow between the images input to the alignment pipeline. The alignment pipeline is further configured to perform an image transformation using the determined flow vectors to align the images input to the alignment pipeline. The image transformation may comprise a warping operation.

At item 740, the ANN is trained using the output of the alignment pipeline and the output image data of the first image. The ANN is trained to emulate a result derivable using the alignment pipeline. The ANN may then be used in place of the alignment pipeline to process image data.

Embodiments of the disclosure include the methods described above performed on a computing device, such as the computing device 800 shown in Figure 8. The computing device 800 comprises a data interface 801, through which data can be sent or received, for example over a network. The computing device 800 further comprises a processor 802 in communication with the data interface 801, and memory 803 in communication with the processor 802. In this way, the computing device 800 can receive data, such as image data, video data, or various data structures, via the data interface 801, and the processor 802 can store the received data in the memory 803, and process it so as to perform the methods described herein, including processing image data and/or generating images.

Each device, module, component, machine or function as described in relation to any of the examples described herein may comprise a processor and/or processing system or may be comprised in apparatus comprising a processor and/or processing system. One or more aspects of the embodiments described herein comprise processes performed by apparatus. In some examples, the apparatus comprises one or more processing systems or processors configured to carry out these processes. In this regard, embodiments may be implemented at least in part by computer software stored in (non-transitory) memory and executable by the processor, or by hardware, or by a combination of tangibly stored software and hardware (and tangibly stored firmware). Embodiments also extend to computer programs, particularly computer programs on or in a carrier, adapted for putting the above described embodiments into practice. The program may be in the form of non-transitory source code, object code, or in any other non-transitory form suitable for use in the implementation of processes according to embodiments. The carrier may be any entity or device capable of carrying the program, such as a RAM, a ROM, or an optical memory device, etc.

The present disclosure also provides various means (e.g. methods, systems, computer programs, etc.) for process images. A flow-based neural network is trained to aggregate the temporal information from images that are adjacent in time or space based on warping operations. The flow-based network is solely used during training. A feature approximation network is trained using: (i) the flow-based network and (ii) knowledge distillation, in order to alleviate the flow-based network's need for warping operations. The feature approximation network is used at inference in order to carry out the task of the flow-based network for image or video processing operations.

In embodiments, the knowledge distillation is based on an affinity distillation loss to model the long-range dependency from sophisticated flow network-based feature alignment into a simplified student network.

The present disclosure provides a method for image and video denoising that alleviates the necessity of using flow networks and warping operations. While existing methods for image or video restoration or denoising rely on a pre-trained computationally heavy flow network to align adjacent frames in order to aggregate temporal information, the presently-described methods approximate such operations through a stack of simpler convolutional operations. In embodiments, a video denoising framework involving a flow network and warping operation is initially trained. Once the framework is trained, the flow network coupled with the warping operation is used as a teacher network, and a feature approximation network that acts as a trainable student network is added. The student feature approximation network is trained to mimic the outputs of the flow network coupled with the warping operation. Thus, the flow network and warping operation can be eliminated, and the feature approximation network is instead used during inference, to allow for faster and more efficient deployment. The presently-described methods can be used for a variety of image processing applications, such as those involving image or video restoration or enhancement, e.g. video super-resolution, video denoising, patch completion, correction of occlusions or missing information, etc.

While the present disclosure has been described and illustrated with reference to particular embodiments, it will be appreciated by those of ordinary skill in the art that the disclosure lends itself to many different variations not specifically illustrated herein.

Where in the foregoing description, integers or elements are mentioned which have known, obvious or foreseeable equivalents, then such equivalents are herein incorporated as if individually set forth. Reference should be made to the claims for determining the true scope of the present invention, which should be construed so as to encompass any such equivalents. It will also be appreciated by the reader that integers or features of the disclosure that are described as preferable, advantageous, convenient or the like are optional and do not limit the scope of the independent claims. Moreover, it is to be understood that such optional integers or features, whilst of possible benefit in some embodiments of the disclosure, may not be desirable, and may therefore be absent, in other embodiments.

Embodiments of the present disclosure may be described with reference to the following numbered clauses.

Clause 1. A computer-implemented method of processing image data, the method comprising: receiving image data of a first image in a sequence of images; processing the received image data using an artificial neural network to generate output image data of the first image, the output image data being indicative of an alignment of the first image with a second image in the sequence of images; and using the output image data for image processing, wherein the artificial neural network is trained using outputs of an alignment pipeline configured to perform alignment of images input to the alignment pipeline, wherein the alignment pipeline is configured to: determine flow vectors representing optical flow between the images input to the alignment pipeline; and perform an image transformation using the determined flow vectors to align the images input to the alignment pipeline, wherein the artificial neural network is trained to emulate a result derivable using the alignment pipeline.

Clause 2. A method according to clause 1, wherein the image transformation comprises a warping operation for warping at least one of the images input to the alignment pipeline based on the determined flow vectors.

Clause 3. A method according to clause 1 or clause 2, wherein the first image and the second image are successive images in a temporal sequence of images.

Clause 4. A method according to any preceding clause, the method comprising using the output image data of the first image to aggregate temporal information of the first image and/or the second image, thereby to enable temporal correlation between the first image and the second image to be used to enhance the first image and/or the second image.

Clause 5. A method according to any preceding clause, wherein the output image data of the first image comprises an approximation of a result of performing the image transformation on the image data of the first image using flow vectors representing optical flow between the first image and the second image.

Clause 6. A method according to any preceding clause, wherein the artificial neural network comprises a series of convolutional filters, and wherein processing the received image data using the artificial neural network comprises applying the convolutional filters to the received image data.

Clause 7. A method according to clause 6, wherein the image transformation is dependent on content of the images input to the alignment pipeline, and wherein the convolutional filters of the artificial neural network are independent of content of the first image.

Clause 8. A method according to any preceding clause, wherein the received image data of the first image comprises a map of image features derivable from the first image, and wherein the output image data comprises an approximation of a result of aligning the map of image features derivable from the first image with a map of image features derivable from the second image.

Clause 9. A method according to any preceding clause, wherein the alignment pipeline comprises a further artificial neural network trained to determine the flow vectors.

Clause 10. A method according to any preceding clause, wherein the artificial neural network is trained using an affinity distillation loss function configured to determine a difference between a teacher affinity matrix and a student affinity matrix, wherein the teacher affinity matrix is indicative of dependencies between image features in a map of image features generated by the alignment pipeline, and wherein the student affinity matrix is indicative of dependencies between image features in a map of image features generated by the artificial neural network.

Clause 11. A method according to any preceding clause, the method comprising: receiving image data of the second image; processing the received image data of the second image using the artificial neural network to generate output image data of the second image, the output image data of the second image being indicative of alignment of the second image with the first image; and using the output image data of the second image for image processing.

Clause 12. A method according to any preceding clause, the method comprising upscaling the first image and/or the second image using the output image data of the first image.

Clause 13. A method according to any preceding clause, the method comprising denoising the first image and/or the second image using the output image data of the first image.

Clause 14. A computing device comprising: a processor; and a memory, wherein the computing device is arranged to perform, using the processor, a method according to any one of clauses 1 to 13.

Clause 15. A computer program product arranged, when executed on a computing device comprising a processor and memory, to perform a method according to any one of clauses 1 to 13.

## Claims

1. A computer-implemented method of processing image data, the method comprising:
receiving image data of a first image in a sequence of images;
processing the received image data using a first artificial neural network to generate output image data of the first image, the output image data being indicative of an alignment of the first image with a second image in the sequence of images; and
using the output image data for image processing,
wherein the first artificial neural network is trained using outputs of an alignment pipeline configured to perform alignment of images input to the alignment pipeline,
wherein the alignment pipeline comprises a second artificial neural network trained to determine flow vectors,
wherein the alignment pipeline is configured to:
determine, using the trained second artificial neural network, flow vectors representing optical flow between images input to the alignment pipeline; and
perform an image transformation using the determined flow vectors to align the images input to the alignment pipeline,
wherein the first artificial neural network is trained to emulate a result derivable using the alignment pipeline, and
wherein the first artificial neural network is used in place of the alignment pipeline to process the received image data of the first image.

2. The computer-implemented method of claim 1, wherein the first artificial neural network is trained using a teacher-student training framework comprises a teacher network and a student network, wherein the teacher network is the alignment pipeline and the student network is the first artificial neural network.

3. The computer-implemented method of claim 1 or claim 2, wherein the first artificial neural network is trained using a knowledge distillation loss function configured to determine a difference between an output of the first artificial neural network and an output of the alignment pipeline.

4. The computer-implemented method of any preceding claim, wherein the first image and the second image are successive images in a temporal sequence of images.

5. The computer-implemented method of any preceding claim, the method comprising using the output image data of the first image to aggregate temporal information of the first image and/or the second image, thereby to enable temporal correlation between the first image and the second image to be used to enhance the first image and/or the second image.

6. The computer-implemented method of any preceding claim, wherein the output image data of the first image comprises an approximation of a result of performing the image transformation on the image data of the first image using flow vectors representing optical flow between the first image and the second image.

7. The computer-implemented method of any preceding claim,
wherein the first artificial neural network comprises a series of convolutional filters, and
wherein processing the received image data using the first artificial neural network comprises applying the convolutional filters to the received image data.

8. The computer-implemented method of claim 7,
wherein the image transformation is dependent on content of the images input to the alignment pipeline, and
wherein the convolutional filters of the first artificial neural network are independent of content of the first image.

9. The computer-implemented method of any preceding claim,
wherein the received image data of the first image comprises a map of image features derivable from the first image, and
wherein the output image data comprises an approximation of a result of aligning the map of image features derivable from the first image with a map of image features derivable from the second image.

10. The computer-implemented method of any preceding claim,
wherein the first artificial neural network is trained using an affinity distillation loss function configured to determine a difference between a teacher affinity matrix and a student affinity matrix,
wherein the teacher affinity matrix is indicative of dependencies between image features in a map of image features generated by the alignment pipeline, and
wherein the student affinity matrix is indicative of dependencies between image features in a map of image features generated by the first artificial neural network.

11. The computer-implemented method of any preceding claim, the method comprising:
receiving image data of the second image;
processing the received image data of the second image using the first artificial neural network to generate output image data of the second image, the output image data of the second image being indicative of alignment of the second image with the first image; and
using the output image data of the second image for image processing.

12. The computer-implemented method of any preceding claim, the method comprising upscaling the first image and/or the second image using the output image data of the first image.

13. The computer-implemented method of any preceding claim, the method comprising denoising the first image and/or the second image using the output image data of the first image.

14. A computing device comprising:
a processor; and
a memory,
wherein the computing device is arranged to perform, using the processor, a method according to any of claims 1 to 13.

15. A computer program product arranged, when executed on a computing device comprising a processor and memory, to perform a method according to any of claims 1 to 13.
